Europäisches Patentamt

European Patent Office

Office européen des brevets

(11) Veröffentlichungsnummer: **0 366 100**
**A1**

## (12) EUROPÄISCHE PATENTANMELDUNG

(21) Anmeldenummer: **89119774.1**

(22) Anmeldetag: **24.10.89**

(51) Int. Cl.5: **A46B 15/00** , **A46B 5/00**

(30) Priorität: **25.10.88 DE 3836232**

(43) Veröffentlichungstag der Anmeldung:
**02.05.90 Patentblatt 90/18**

(84) Benannte Vertragsstaaten:
**AT BE CH DE ES FR GB GR IT LI LU NL SE**

(71) Anmelder: **Roth, Erwin**
**Drygalskiallee 33**
**D-8000 München 70(DE)**

(72) Erfinder: **Roth, Erwin**
**Drygalskiallee 33**
**D-8000 München 70(DE)**

(74) Vertreter: **Haft, Berngruber, Czybulka**
**Hans-Sachs-Strasse 5**
**D-8000 München 5(DE)**

(54) **Zahnbürste.**

(57) Die Erfindung bezieht sich auf eine Zahnbürste (1) mit einem Stiel (2) und einem Bürstenträger (3). Um den Benutzer an das rechtzeitige Auswechseln der Zahnbürste zu erinnern, wird vorgeschlagen, zumindest einen Teil (3, 3') der Zahnbürste (1) aus einem sich allmählich zersetzenden, auflösenden oder verfärbenden Material (3, 7) auszubilden. Vorzugsweise wird hierzu ein wasserlöslicher Kunststoff verwendet.

Fig. 3

Fig. 4

EP 0 366 100 A1

## Zahnbürste

Die Erfindung bezieht sich auf eine Zahnbürste gemäß dem Oberbegriff des Patentanspruches 1.

Es ist eine beklagenswerte Tatsache, daß die Zahnpflege nicht in einem Ausmaß erfolgt, wie sie von Medizinern als wirksamste Vorsorge gegen den Zahnverfall gefordert wird. Dieses Problem liegt nicht nur daran, daß die Zähne zu selten oder zu kurz gebürstet werden, sondern auch häufig daran, daß trotz eifriger Zahnpflege die Zahnbürste eine zu lange Zeit benutzt wird. Man hat festgestellt, daß die Borsten durch das Bürsten angegriffen und ihre Spitzen aufgerauht oder gar gespalten werden. Mit solch aufgerauhten Bürsten wird jedoch das Zahnfleisch verletzt, so daß der Pflegeeffekt konterkariert wird.

Aus der DE-OS 31 40 903 ist eine Zahnbürste bekannt, die in ihrem Griff ein Anzeigeelement aufweist, mit dem z. B. der Monat eingestellt werden kann, in dem die Zahnbürste gekauft worden ist oder ersetzt werden soll. Dieses Anzeigeelement ist zwar arretierbar, kann jedoch auch zufällig verstellt werden, so daß die einmal eingestellte Angabe unter Umständen verfälscht wird. Außerdem kann sich in dem Spalt zwischen Anzeigeelement und dem Griff der Zahnbürste Schmutz einlagern, was nicht nur unansehnlich ist, sondern auch hygienisch nicht einwandfrei.

Aus der europäischen Patentanmeldung EP 0 199 158 A2 ist eine Zahnbürste bekannt, die im Stiel eine Batterie betriebene Einrichtung zur Abgabe von akustischen oder visuellen Signalen aufweist. Sobald die Zahnbürste in die Hand genommen wird, wird diese Einrichtung induktiv oder kapazitiv eingeschaltet, so daß während des Zähneputzens für einen Zeitraum von z. B. 2 min eine Melodie oder ein Sprachtext erklingt bzw. visuelle Signale abgegeben werden. Hiermit soll dem Benutzer während des Zähneputzens eine sensitive angenehme Komponente geboten werden, die zugleich einen Anreiz zum regelmäßigem Zähneputzen darstellen soll. Bei zweimaligem täglichem Gebrauch der Zahnbürse hat die Batterie eine Lebensdauer von etwa drei Monaten, so daß damit auch dem Benutzer mittelbar angezeigt wird, daß die Zahnbürste gewechselt werden sollte.

Die Herstellung und Konstruktion einer solchen Zahnbürste ist aufwendiger als bei herkömmlichen Bürstenarten. Außerdem muß bedacht werden, daß aus Gründen des Umweltschutzes die in der Zahnbürste enthaltene Batterie nach Ablauf der Benutzungszeit nicht einfach mit der Zahnbürste weggeworfen wird, sondern entweder auf Sonderdeponien gesammelt oder recycelt wird.

Der Erfindung liegt die Aufgabe zugrunde, eine Zahnbürste herkömmlichen Types anzugeben, die einfach hergestellt werden kann und bei der der Benutzer unmittelbar auf den Ablauf der maximal zulässigen Gebrauchszeit hingewiesen wird, so daß die Zahnbürste ausgetauscht werden muß.

Diese Aufgabe ist gemäß der Erfindung durch die im kennzeichnenden Teil des Patentanspruches 1 angegebenen Merkmale gelöst.

Demgemäß wird zumindest ein Teil der Zahnbürste aus einem Material gefertigt bzw. mit einem Material versehen, das sich während des Gebrauches allmählich zersetzt, auflöst oder in der Farbe ändert. Dieser Prozeß kann durch Luft, Wasser oder Licht erfolgen. Für diesen Zweck sind eine Vielzahl von Kunststoffen bekannt, so z. B. Polymerisate mit Säure- oder Amingruppen, z. B. ein Polymerisat mit Meth-Acrylsäure als Copolymerem. Derartige Kunststoffe sind in Wasser bzw. in leicht sauren oder basischen Flüssigkeiten löslich. Für einen Farbumschlag sind nicht lichtechte Farbstoffe und nicht lichtechte farbige Kunststoffe geeignet.

Vorzugsweise wird dabei der Übergangsbereich zwischen Borstenträger und Griff zumindest teilweise aus einem sich durch Wasser zersetzenden oder auflösenden Kunststoff gefertigt. Da dieser Übergangsbereich beim Zähneputzen regelmäßig mit Wasser in Berührung kommt, löst sich hier das Material auf, so daß der Borstenträger nach einiger Zeit nicht mehr stabil, sondern nur noch weich und damit für eine Reinigung ungeeignet mit dem Stiel verbunden ist.

Eine andere Möglichkeit besteht z. B. darin, den Borstenträger und/oder den Stiel mit einem Anzeigefeld zu versehen, das mit einem sich zersetzenden oder auflösenden Material bedeckt ist. Nach dem Ablauf der möglichen Benutzungszeit der Zahnbürste hat sich dieses Material, z. B. der erwähnte Kunststoff, aufgelöst, so daß das Anzeigefeld sichtbar wird und wirkungsvoll den Ablauf der Benutzungszeit anzeigt.

Ferner kann der gesamte Zahnbürstenkörper oder nur ein Anzeigefeld aus einem in der Farbe allmählich umschlagenden Material gefertigt sein.

Die Erfindung ist in zwei Ausführungsbeispielen anhand der Zeichnung näher erläutert. In der Zeichnung stellen dar:

Fig. 1 und 2 jeweils eine Zahnbürste gemäß der Erfindung vor Ingebrauchnahme und nach Ablauf der maximalen Nutzungsdauer;

Fig. 3 und 4 eine Zahnbürste gemäß der Erfindung in einem zweiten Ausführungsbeispiel ebenfalls vor Ingebrauchnahme und nach Ablauf der zulässigen Nutzungsdauer;

Fig. 5 und 6 eine Zahnbürste gemäß der Erfindung in einer dritten Ausführungsform ebenfalls vor Ingebrauchnahme und nach Ablauf der zulässigen Nutzungsdauer.

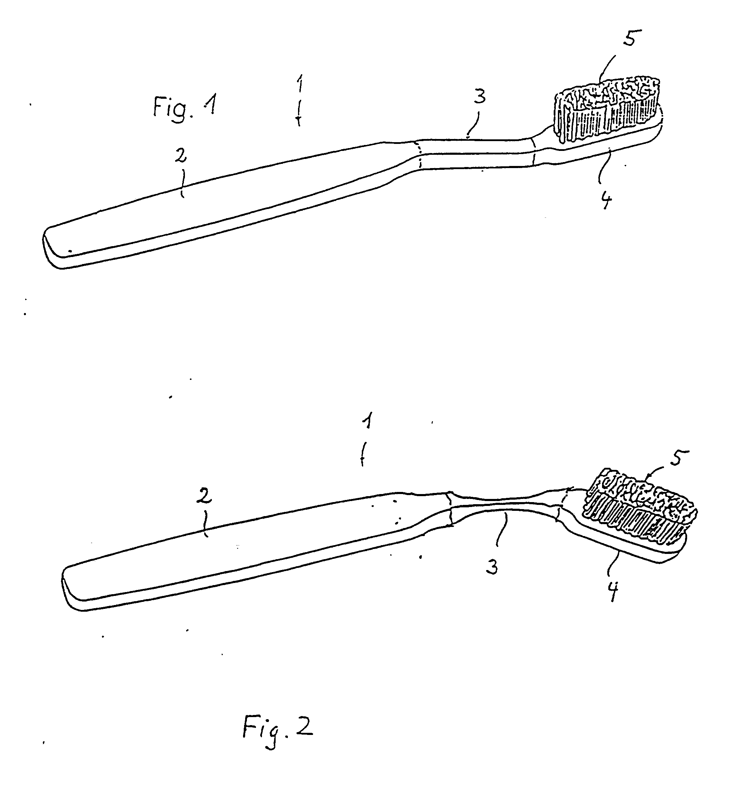

In Fig. 1 ist eine Zahnbürste 1 mit einem Handgriff 2, einem leicht abgeknickten Übergangsbereich 3 und einem Borstenträger 4 für Borsten 5 dargestellt. Der Übergangsbereich 3 zwischen Handgriff 2 und Borstenträger 4 ist aus einem wasserlöslichem Kunststoff hergestellt, z. B. einem Polymerisat mit Acrylsäure als Copolymerem. Beim Putzen der Zähne kommt dieser Übergangsbereich mit Wasser in Berührung, wodurch er sich allmählich auflöst und weich wird. Die Zeitdauer bis zur Erweichung oder Auflösung des Kunststoffes kann durch entsprechende Zusammensetzung des Materiales beeinflußt werden. Erreicht der Übergangsbereich 3 eine Dicke, die für eine stabile Verbindung zwischen Handgriff 2 und Borstenträger nicht mehr ausreicht, so ist die Zahnbürste nicht mehr zu benutzen. Dieser Zustand ist in Fig. 2 dargestellt. Wesentlich ist hierbei, daß der verwendete Kunststoff nicht durch Spröde bricht, was Verletzungen beim Zähneputzen zur Folge haben könnte, sondern daß er sich allmählich auflöst oder soweit erweicht, daß sich beim Zähneputzen der Borstenträger abbiegt und ein entsprechender Druck auf die Zähne nicht mehr aufgebracht werden kann.

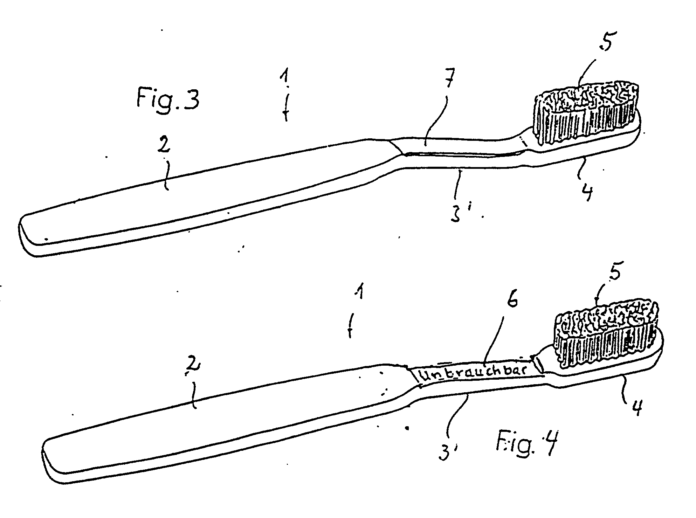

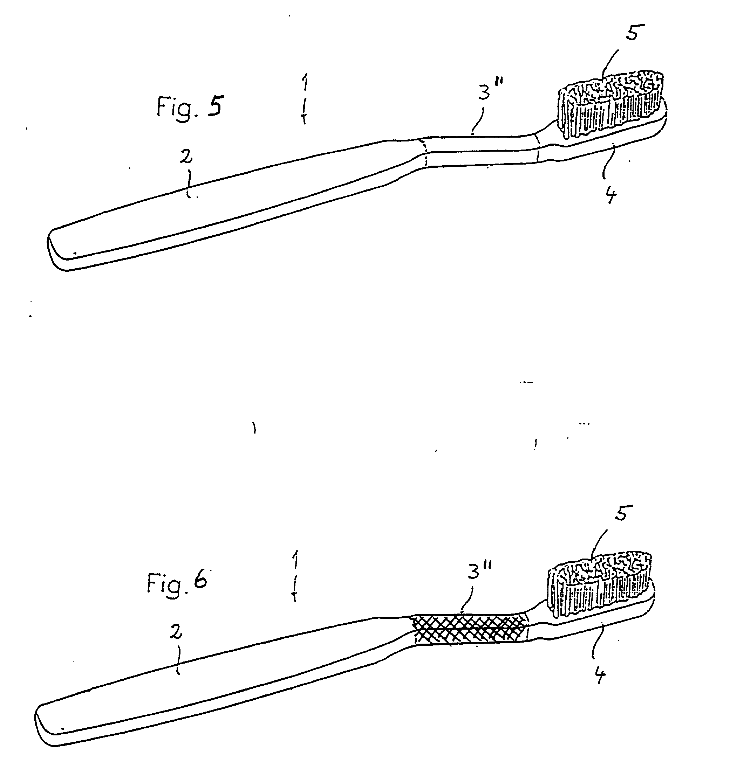

In Fig. 3 ist eine Zahnbürste 1 mit einem Handgriff 2, einem wiederum leicht abgeknickten Übergangsbereich 3' und einem Borstenträger 4' für Borsten 5 dargestellt. Der Übergangsbereich 3' weist zunächst, wie in Fig. 4 gezeigt, ein leicht abgesenktes Anzeigefeld 6 auf, das anschließend mit einem wasserlöslichen Kunststoff 7 bedeckt wird. Während des Gebrauches der Zahnbürste wird dieser Kunststoff allmählich durch das Wasser aufgelöst, so daß das Anzeigefeld 6 freigelegt wird. Hierdurch werden auf dem Anzeigefeld eine Schrift oder sonstige Warnsymbole sichtbar, die den Benutzer an das Auswechseln der Zahnbürste erinnern.

Die Zahnbürste 1 gemäß Fig. 5 weist wiederum einen Handgriff 2, einen abgeknickten Übergangsbereich 3" und einen Borstenträger 4 für Borsten 5 auf. Bei dieser Zahnbürste ist der abgeknickte Übergangsbereich 3" aus einem Material gefertigt, dessen Farbe sich im Laufe der Zeit z. B. durch Licht oder Feuchtigkeit ändert, enthält z. B. nicht lichtechte Farbstoffe, die nach einer gewissen Zeit markant in ihrer Farbe sich verändern, was durch die Kreuzschraffur in Fig. 6 angedeutet ist. Auch hierdurch wird dem Benutzer angezeigt, die Zahnbürste nicht mehr weiter zu benutzen und eine neue zu verwenden.

In den Ausführungsbeispielen ist die Angabe und Anordnung der sich auflösenden, zersetzenden oder sich verfärbenden Kunststoffmaterialien beispielhaft. Ebenso kann die Erfindung nicht nur in Verbindung mit Handzahnbürsten, sondern auch mit für elektrische Zahnbürsten geeigneten Bürstenaufsätzen verwendet werden.

## Ansprüche

1. Zahnbürste mit einem Stiel und einem Borstenträger und mit einer Einrichtung, die das Ende der Gebrauchsfähigkeit der Zahnbürste anzeigt, dadurch gekennzeichnet, daß die Einrichtung dadurch gebildet ist, daß zumindest ein Teil (3, 7) der Zahnbürste (1) aus einem sich allmählich zersetzenden, auflösenden oder in der Farbe sich verändernden Material besteht.

2. Zahnbürste nach Anspruch 1, dadurch gekennzeichnet, daß das Material (3, 7, 3") ein sich allmählich durch Luft, Licht und/oder Wasser zersetzender, auflösender oder in der Farbe umschlagender Kunststoff ist.

3. Zahnbürste nach Anspruch 1 oder 2, dadurch gekennzeichnet, daß das Material ein Polymerisat mit Säure- oder Amingruppen, vorzugsweise ein Polymerisat mit Acrylsäure als Copolymerem ist.

4. Zahnbürste nach Anspruch 1 oder 2, dadurch gekennzeichnet, daß das Material ein nicht lichtechtes Material ist.

5. Zahnbürste nach Anspruch 4, dadurch gekennzeichnet, daß das nicht lichtechte Material ein Kunststoff mit nicht lichtechten Farbstoffen ist.

6. Zahnbürste nach einem der vorhergehenden Ansprüche, dadurch gekennzeichnet, daß die Zahnbürste im Übergangsbereich (3, 3', 3") zwischen Stiel (2) und Borstenträger (4) aus dem sich zersetzenden, auflösenden oder in der Farbe sich ändernden Material besteht.

7. Zahnbürste nach Ansprüche 1 bis 5, dadurch gekennzeichnet, daß die Zahnbürste (1) ein Anzeigefeld (6) aufweist, und daß dieses Anzeigefeld mit dem sich zersetzenden, auflösenden oder in der Farbe sich ändernden Material (7) bedeckt ist.

Fig. 1

Fig. 2

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3400941 (CORONET-WERKE HEINRICH SCHLERF) <br> * Ansprüche 1-3; Figuren 1-4 * <br> --- | 1 | A46B15/00 <br> A46B5/00 |
| P,A | EP-A-0303202 (GILLETTE CANADA) <br> * Seite 3, Zeile 53 - Seite 7, Zeile 24; Figuren 1-5 * <br> --- | 1 | |
| A | DE-U-8802744 (GEBR. SCHABERT) <br> * Ansprüche 1, 2; Figuren 1-6 * <br> ----- | 1 | |

RECHERCHIERTE SACHGEBIETE (Int. Cl.5 )

A46B
A46D

Der vorliegende Recherchenbericht wurde für alle Patentansprüche erstellt

| Recherchenort | Abschlußdatum der Recherche | Prüfer |
|---|---|---|
| DEN HAAG | 26 JANUAR 1990 | ERNST R.T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes
    Dokument

EPO FORM 1503 03.82 (P0403)